# EUROPÄISCHE PATENTANMELDUNG

(11) **EP 2 463 764 A2**
(43) Veröffentlichungstag der Anmeldung: **13.06.2012**
(21) Anmeldenummer: 11009784.7
(22) Anmeldetag: 12.12.2011
(51) Int. Cl.: G06F 3/048

(54) **Vorrichtung und Verfahren zur Bedienung eines berührungsempfindlichen Bildschirms**

(30) Priorität: 12.12.2010 DE 202010016462 U
(71) Anmelder: Klotz, Thomas, 82049 Pullach (DE)
(72) Erfinder: Klotz, Thomas, 82049 Pullach (DE)
(74) Vertreter: Röthinger, Rainer

(57) **Zusammenfassung**

Es wird eine Technik zur Bedienung eines berührungsempfindlichen Bildschirms angegeben. Ein Vorrichtungsaspekt dieser Technik umfasst einen Aufsatz für den berührungsempfindlichen Bildschirm sowie wenigstens ein in dem Aufsatz beweglich montiertes Steuerelement. Das Steuerelement weist einen Gleiter oder Druckpunkt auf, der zur Bedienung des berührungsempfindlichen Bildschirms mit diesem in Kontakt steht oder in Kontakt bringbar ist.

## Beschreibung

### Technisches Gebiet

Die vorliegende Offenbarung betrifft allgemein berührungsempfindliche Bildschirme, auch "Touchscreens" genannt. Genauer gesagt wird eine Technik zur sicheren Bedienung derartiger Bildschirme angegeben.

### Hintergrund

Berührungsempfindliche Bildschirme werden heute manuell oder mit einfachen Eingabehilfen wie Stiften bedient. Auf dem Bildschirm dargestellte Grafiken dienen hierbei als Orientierungshilfe und Rückmeldung für den Bediener.

Ein bekannter Nachteil aller berührungsempfindlichen Bildschirme besteht darin, dass eine versehentliche Bedienung bereits durch leichtes Berühren des Bildschirms erfolgen kann. Eine präzise Bedienung des Bildschirms erfordert andererseits notwendigerweise eine Betrachtung des Bildschirms. Zudem lässt die Bedienung mittels Fingers oder Stifts nur grobe Eingabeoperationen im Millimeterbereich und darüber zu, obwohl die heute verfügbaren berührungsempfindlichen Bildschirme in der Lage wären, Berührungen im Sub-Millimeterbereich aufzulösen.

Die genannten Nachteile verhindern bis heute den Einsatz von berührungsempfindlichen Bildschirmen in Bereichen, in denen es auf eine präzise Steuerung ankommt oder in denen eine versehentliche Fehlbedienung Schäden verursachen kann.

### Kurzer Abriss

Es sind daher eine Vorrichtung und ein Verfahren anzugeben, welche die Bedienung eines berührungsempfindlichen Bildschirms verbessern.

Gemäß einem Aspekt wird eine Vorrichtung zur Bedienung eines berührungsempfindlichen Bildschirms angegeben, welche einen Aufsatz für den berührungsempfindlichen Bildschirm und wenigstens ein in dem Aufsatz beweglich montiertes Steuerelement umfasst, wobei das Steuerelement einen Gleiter oder Druckpunkt aufweist, der zur Bedienung des berührungsempfindlichen Bildschirms mit diesem in Kontakt steht oder in Kontakt bringbar ist.

Die Vorrichtung kann die Funktion eines oder mehrerer verschiedener mechanischer Eingabeelemente mechanisch abbilden. Zu solchen Eingabeelementen zählen beispielsweise ein Schieberegler, ein Drehknopf und ein Taster. So kann das wenigstens eine Steuerelement als manuell in horizontaler (z.B. in Längsrichtung und/oder in Querrichtung) beweglicher Schieberegler ausgebildet sein. Ferner kann das wenigstens eine Steuerelement als manuell drehbarer Drehknopf ausgebildet sein. Auch kann das wenigstens eine Steuerelement als manuell in vertikaler Richtung beweglicher Taster ausgebildet werden. Die hier angegebenen Bewegungsrichtungen beziehen sich auf eine durch den berührungsempfindlichen Bildschirm definierte Ebene.

Bei der Vorrichtung können mehrere Steuerelemente vorgesehen sein. So kann die Vorrichtung etwa zwei, drei, vier oder auch mehr als vier Steuerelemente umfassen. Es können dabei auch mehrere Steuerelement des gleichen Typs (also z.B. mehrere Schieberegler und/oder mehrere Drehregler und/oder mehrere Taster) vorhanden sein.

Der Aufsatz kann teilweise, überwiegend oder vollständig transparent ausgeführt sein, etwa damit ein Benutzer auf dem Bildschirm dargestellte Elemente oder Grafiken betrachten kann. Dabei kann der Aufsatz zumindest teilweise aus einem transparenten Material bestehen oder aber geeignete Durchbrechungen oder Aussparungen aufweisen. Der Aufsatz kann den Bildschirm vollständig oder teilweise überdecken.

Es kann eine Führung für das Steuerelement vorgesehen sein. Die Führung kann als Linearführung (z.B. in vertikaler, horizontaler oder schräger Richtung) oder als Rotationsführung ausgebildet sein. Gemäß einer Realisierung begrenzt die Führung die Beweglichkeit des Steuerelements. Die Führung kann in den Aufsatz integriert sein. Für das Steuerelement kann ein Gehäuse vorgesehen sein, welches in oder auf den Aufsatz montiert ist und als die Führung fungiert.

Das Steuerelement kann einen Griffbereich mit einem elektrisch leitfähigen Material aufweisen. Auch der Druckpunkt oder Gleiter kann ein elektrisch leitfähiges Material aufweisen und darüber hinaus elektrisch leitend mit dem Griffbereich verbunden sein. Eine derartige Implementierung kommt vor allem bei berührungsempfindlichen Bildschirmen in Frage, die auf einem kapazitiven Prinzip basieren. Die hier vorgestellte Technik ist aber auch für einen auf einem induktiven, resistiven oder anderweitigen Prinzip basierenden berührungsempfindlichen Bildschirm implementierbar. Gemäß einem weiteren Aspekt wird ein System umfassend die hier beschriebene Vorrichtung zur Bedienung eines berührungsempfindlichen Bildschirms sowie den berührungsempfindlichen Bildschirm selbst bereit gestellt.

Bei dem Bildschirm kann es sich um einen Flachbildschirm oder einen anderen Bildschirmtyp handeln. Ferner kann der Bildschirm in ein Gerät integriert sein, wie beispielsweise ein Smartphone oder einen Tablet-Computer.

Auf dem berührungsempfindlichen Bildschirm kann wenigstens ein Bildschirmelement (z.B. ein Bedienfeld) definiert und/oder grafisch darstellbar sein, das über das im Aufsatz montierte Steuerelement bedienbar ist. Das Bildschirmelement selbst kann dabei sichtbar oder von dem Aufsatz (bzw. dem zugeordneten Steuerelement) vollständig oder teilweise verdeckt sein. Auf dem Bildschirm kann allgemein eine Grafik (einschließlich des bedienbaren Bildschirmelements) darstellbar sein, wobei der Aufsatz teilweise oder vollständig transparent ausgeführt ist, um eine Betrachtung der Grafik zu ermöglichen.

Über den Gleiter oder den Druckpunkt kann der berührungsempfindliche Bildschirm an genau einer Stelle pro Steuerelement ansteuerbar sein. Die Stelle kann im Wesentlichen punktförmig oder auch flächig ausgedehnt sein.

Das System kann ferner ein Steuergerät umfassen. Bei einer solchen Implementierung kann der berührungsempfindliche Bildschirm ausgebildet sein, Steuersignale an das Steuergerät zu übermitteln. Das Steuergerät kann mit dem berührungsempfindlichen Bildschirm in einem Gerät (z.B. einem Smartphone oder Tablet-Computer) integriert sein oder aber davon getrennt vorgesehen sein. Das Steuergerät kann auch Teil eines zu steuerenden Geräts sein. Wenn das System zur Ansteuerung von Audiotechnik (z.B. von Funktionen eines Mischpults) und/oder Videotechnik (z.B. von Funktionen eines Schneidegeräts) ausgebildet ist, kann das Steuergerät beispielsweise Teil des entsprechenden Geräts sein. Demgemäß kann das hier vorgestellte System oder die hier vorgestellte Vorrichtung zur Steuerung eines Geräts (etwa zur Steuerung von Audiotechnik und/oder Videotechnik, insbesondere zur Pegeleinstellung) verwendet werden.

Ebenfalls bereit gestellt wird ein Verfahren zur Erzeugung eines Steuersignals mittels eines berührungsempfindlichen Bildschirms unter Verwendung eines am berührungsempfindlichen Bildschirm beweglich montierten mechanischen Steuerelements, wobei das Steuerelement einen Druckpunkt oder Gleiter aufweist. Das Verfahren umfasst die Schritte Erkennen eines Berührungspunkts oder mehrerer Berührungspunkte als Folge einer manuellen Bewegung, Verstellung oder Drehung des Druckpunkts oder Gleiters auf dem berührungsempfindlichen Bildschirm und Erzeugung eines Steuersignals auf der Grundlage des erkannten Berührungspunkts oder der erkannten Berührungspunkte. Das Verfahren kann weitere der hier beschriebenen Schritte, Prozeduren und Funktionen umfassen.

Ferner wird ein Computerprogrammprodukt angegeben, das Programmcodeabschnitte zur Durchführung des hier beschriebenen Verfahrens, wenn das Computerprogrammprodukt auf einem Computer ausgeführt wird, umfasst. Das Computerprogrammprodukt kann auf einem computerlesbaren Datenträger, wie beispielsweise einem Halbleiterspeicher, einer CD-ROM oder einer DVD, abgespeichert sein. Ferner kann das Computerprogrammprodukt als Datensignal zum Herunterladen auf einen Datenträger bereit gestellt werden.

### Kurze Beschreibung der Zeichnungen

Weitere Einzelheiten, Vorteile und Aspekte der hier beschriebenen Lehre ergeben sich aus den Ausführungsbeispielen, die unter Bezugnahme auf die Figuren beschrieben werden. Es zeigen:
- Fig. 1: eine schematische Aufsicht auf ein erstes Ausführungsbeispiel eines Bedienungssystems mit einem berührungsempfindlichen Bildschirm und mehreren Steuerelementen;
- Fig. 2: eine schematische Seitenansicht des Bedienungssystems gemäß Fig. 1;
- Fign. 3A und 3B: schematische Schnittansichten in Längsrichtung und Querrichtung eines ersten Ausführungsbeispiels eines Steuerelements;
- Fign. 4A und 4B: schematische Schnittansichten in Längsrichtung und Querrichtung eines zweiten Ausführungsbeispiels eines Steuerelements;
- Fign. 5A und 5B: schematische Schnittansichten in Längsrichtung und Querrichtung eines dritten Ausführungsbeispiels eines Steuerelements;
- Fig. 6: eine schematische Aufsicht auf ein zweites Ausführungsbeispiel eines Bedienungssystems mit einem berührungsempfindlichen Bildschirm und mehreren Steuerelementen; und
- Fig. 7: ein Ablaufdiagramm, welches ein Ausführungbeispiel eines Verfahrens zur Erzeugung eines Steuersignals veranschaulicht.

### Detaillierte Beschreibung

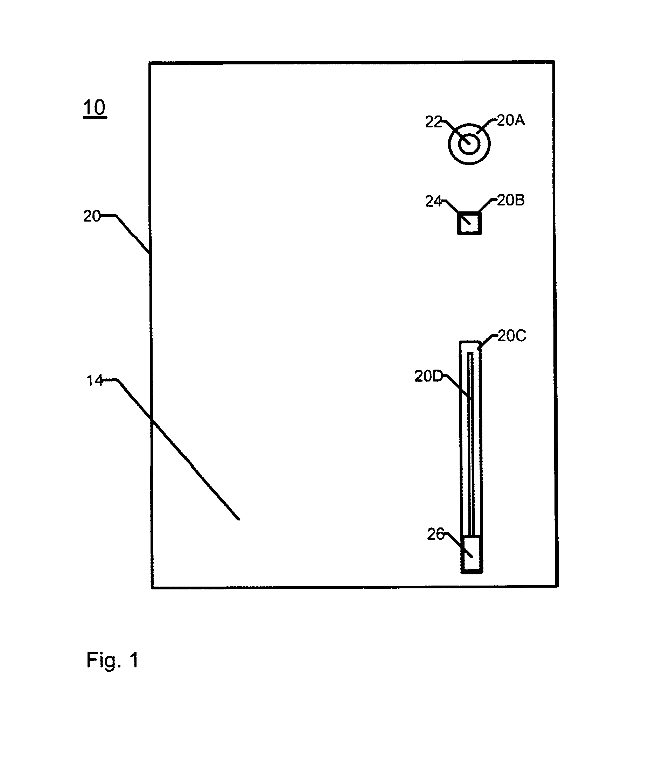

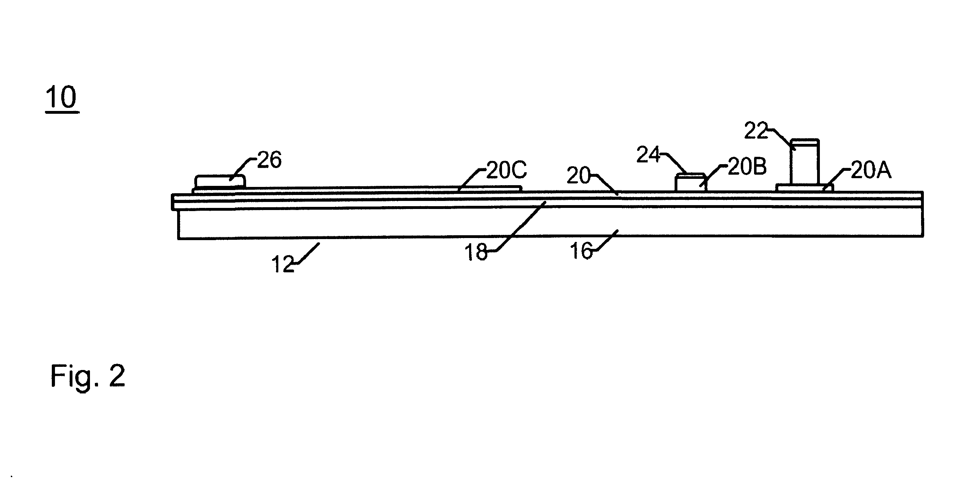

Im Folgenden wird zunächst unter Bezugnahme auf die Fign. 1 und 2 ein erstes Ausführungsbeispiel eines Bedienungssystems mit einem berührungsempfindlichen

Bildschirm beschrieben. Das erste Ausführungsbeispiel ist schematischer Natur und in erster Linie zur Veranschaulichung der hier vorgestellten Bedienungstechnik gedacht. Es versteht sich, dass für konkrete reale Bedienungsanwendungen Anpassungen und Ergänzungen der schematisch erläuterten Aspekte notwendig werden können.

Bezug nehmend auf die Fign. 1 und 2 umfasst das dort exemplarisch dargestellte Bedienungssystem 10 einen berührungsempfindlichen Bildschirm (oder "Touchscreen") 12 sowie eine Bedienungsvorrichtung 14 für den Bildschirm 12.

Im vorliegenden Ausführungsbeispiel basiert die Funktionsweise des berührungsempfindlichen Bildschirms 12 auf einem kapazitiven Prinzip und umfasst eine LCD-Anzeigeeinheit 16 sowie ein unmittelbar darüber angeordnetes berührungsempfindliches Glassubstrat 18. Da es sich bei dem berührungsempfindlichen Bildschirm 12 um einen handelsüblichen Bildschirm handeln kann, wird im Folgenden auf dessen interne Elektronik und deren Funktionsweise nicht näher eingegangen. Ferner ist darauf hinzuweisen, dass das Funktionsprinzip des berührungsempfindlichen Bildschirms 12 in anderen Ausführungsbeispielen auf induktiven, resistiven, optischen oder anderen Mechanismen basieren kann.

Der berührungsempfindliche Bildschirm 12 kann beispielsweise Teil eines Smartphones oder Tablet-Computers sein. Es wäre jedoch auch denkbar, dass der berührungsempfindliche Bildschirm 12 Teil eines größeren Gerätes, wie beispielsweise einer Werkzeugmaschine, einer industriellen Steueranlage, eines Audio-Mischpults, oder eines Video-Schneidegeräts, ist.

Die Bedienungsvorrichtung 14 umfasst einen Aufsatz 20 für den berührungsempfindlichen Bildschirm 12 sowie mehrere in dem Aufsatz 20 beweglich montierte Steuerelemente 22, 24, 26. Auf den Aufsatz 20 kann (z.B. im Bereich der Anzeigeeinheit 16) eine Beschriftung und/oder Grafik aufgebracht sein. Diese Beschriftung und/oder Grafik kann im Zusammenhang mit einer Bedienung der Steuerelemente 22, 24, 26 stehen und beispielsweise eine (beschriftete oder unbeschriftete) Skala beinhalten.

Bei dem Aufsatz 20 handelt es sich im vorliegenden Ausführungsbeispiel um eine transparente Trägerplatte aus Glas oder Kunststoff, welche auf dem Glassubtrat 18 aufliegt und dieses vollständig abdeckt. Der Aufsatz 20 ist bezüglich des berührungsempfindlichen Bildschirms 12 gegen Verschieben und Verdrehen gesichert. Zu diesem Zweck kann ein Befestigungselement wie ein Rahmen, eine oder mehrere Klammern, usw. vorgesehen sein (in den Fign. nicht dargestellt).

Der Aufsatz 20 ist im Wesentlichen transparent ausgebildet, um eine Betrachtung von der auf der Anzeigeeinheit 16 dargestellten Grafiken zu ermöglichen. In anderen Ausführungsbeispielen könnte der Aufsatz 20 zu diesem Zweck mit einer oder mehreren Durchbrechungen versehen werden. Die auf der Anzeigeeinheit 16 dargestellte Grafik kann eine Rückmeldung bezüglich einer Bedienung eines oder mehrerer der Steuerelemente 22, 24, 26 geben. Zusätzlich oder alternativ hierzu kann eine derartige Rückmeldung jedoch auch anderweitig erfolgen, beispielsweise akustisch, haptisch oder auf einer von der Anzeigeeinheit 16 verschiedenen Anzeigeeinheit.

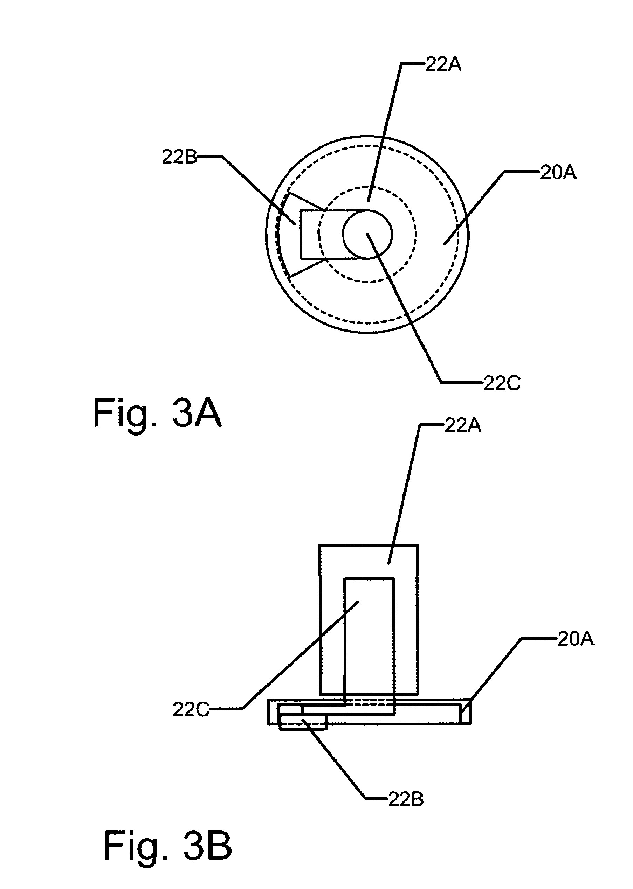

Im Folgenden werden der Aufbau und die Funktionsweise jedes der drei exemplarischen Steuerelemente 22, 24, 26 unter Bezugnahme auf die Fign. 3 bis 5 näher erläutert. Den Steuerelementen 22, 24, 26 gemeinsam ist hierbei, dass sie einen Griffbereich aufweisen, der mechanisch mit einem Druckpunkt oder Gleiter des Steuerelements 22, 24, 26 verbunden ist. Der Druckpunkt oder Gleiter ist zur Bedienung des berührungsempfindlichen Bildschirms 12 mit diesem (bzw. dem Glassubstrat 18) in Kontakt bringbar oder steht mit diesem (bereits dessen Grundstellung) in Kontakt. Der Aufsatz 20 hat daher zumindest im Bewegungsbereich des Druckpunkts bzw. Gleiters eine Anpassung.

Da der berührungsempfindliche Bildschirm 12 im Ausführungsbeispiel auf einem kapazitiven Prinzip basiert, ist sowohl der Griffbereich als auch der Druckpunkt oder Gleiter des Steuerelements 22, 24, 26 mit einem elektrisch leitfähigen Material versehen, wobei der Griffbereich mit dem Druckpunkt oder Gleiter elektrisch leitend verbunden ist. Auf diese Weise lässt sich durch Berühren des Griffbereichs durch Bediener eine kapazitive Wechselwirkung mit dem Bildschirm 12 bewerkstelligen.

Die Fign. 3A und 3B zeigen ein erstes Ausführungsbeispiel eines als Drehknopf bzw. Drehregler ausgebildeten und manuell drehbaren Steuerelements 22. Über dieses Steuerelement 22 bildet die Bedienungsvorrichtung 14 somit einen Drehknopf bzw. Drehregler mechanisch ab. Für das Steuerelement 22 ist ein im Wesentlichen hohlzylindrisch ausgebildetes Gehäuse 20A in den Aufsatz 20 integriert. Das Gehäuse 20A dient einer Rotationsführung des Steuerelements 22.

Das Steuerelement 22 umfasst einen im Wesentlichen zylindrisch ausgebildeten Griffbereich 22A, einen als Gleiter bzw. Druckpunkt ausgebildeten Aktuator 22B sowie eine drehbar im Gehäuse 20A gelagerte Achse 22C, welche den Griffbereich 22A sowohl mechanisch als auch elektrisch leitend mit dem Aktuator 22B koppelt. Der Aktuator 22B ist im Wesentlichen flächig ausgebildet und liegt in seiner Grundstellung auf dem Bildschirm 12 (bzw. dem Glassubstrat 18) gleitbar auf.

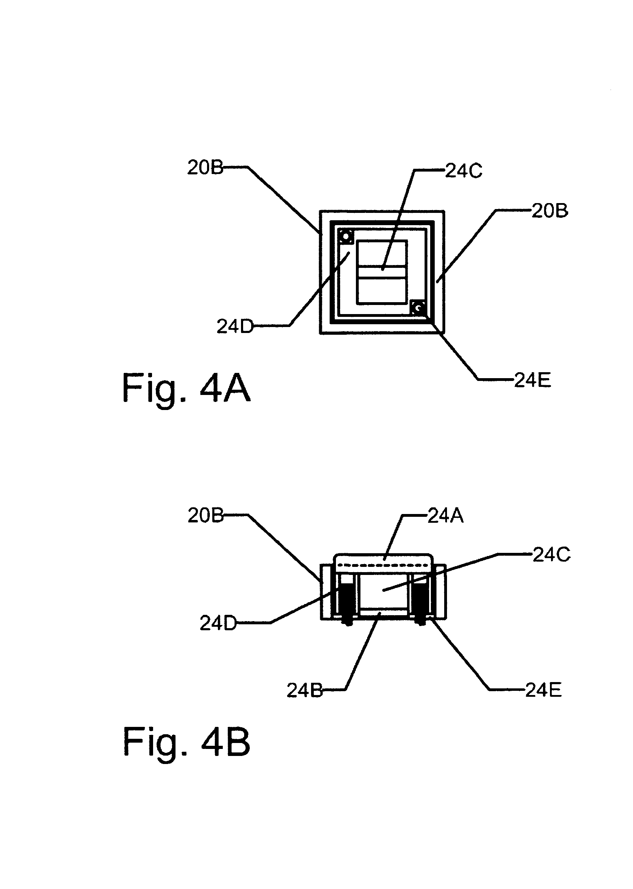

Die Fign. 4A und 4B zeigen ein zweites Ausführungsbeispiel eines als Taster ausgebildeten Steuerelements 24, welches in vertikaler Richtung bezüglich des Bildschirms 12 manuell beweglich ist. Mittels des Steuerelements 24 bildet die Bedienungsvorrichtung 14 somit die Funktion eines Tasters mechanisch ab. Für das Steuerelement 24 ist ein quadratisch konturiertes Gehäuse 20B in den Aufsatz 20 integriert, welches als Linearführung für das Steuerelement 24 fungiert.

Das Steuerelement 24 umfasst einen als Tastenkopf ausgebildeten Griffbereich 24A sowie einen als Druckpunkt ausgebildeten Aktuator 24B von im Wesentlichen rechteckiger Gestalt. Der Aktuator 24B ist über einen Steg 24C mechanisch sowie elektrisch leitend mit dem Griffbereich 24A verbunden. Auf der Unterseite des Griffbereichs 24A ist ein nichtleitender Tastenkörper 24D mit einem quadratischen Hohlprofil vorgesehen. Auf der dem Bildschirm 12 zugewandten Unterseite des Tastenkörpers 24D sind zwei sich diagonal gegenüberliegende Sacklöcher vorgesehen, in denen jeweils ein als Schraubenfeder ausgebildetes Rückstellelement 24E aufgenommen ist. Jedes Rückstellelement 24E liegt an seinem aus dem Sackloch herausragenden Ende an dem Aufsatz 20 an und drängt den Griffbereich 24A von dem Aufsatz 20 weg in seine Grundstellung. In dieser Grundstellung befindet sich der Aktuator 24B nicht in Kontakt mit dem Bildschirm. Der Aktuator 24B ist jedoch durch eine manuelle Krafteinleitung in den Griffbereich 24A mit dem Bildschirm 12 (bzw. dem Glassubstrat 18) in Kontakt bringbar.

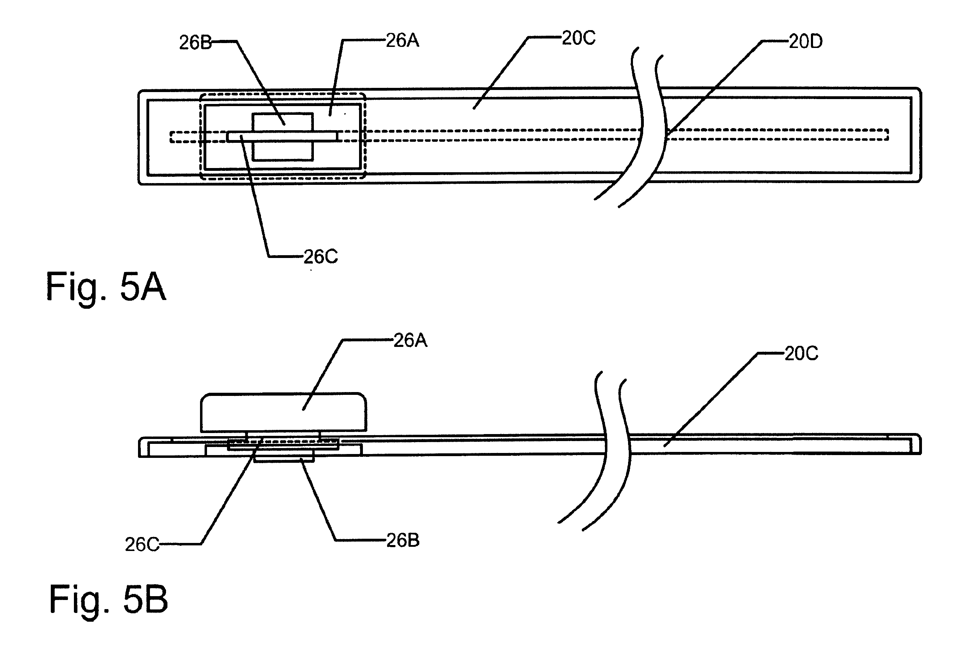

Die Fign. 5A und 5B zeigen ein drittes Ausführungsbeispiel eines als Schieberegler ausgebildeten Steuerelements 26. Der Schieberegler ist bezüglich des Aufsatzes 20 manuell in Längsrichtung beweglich und gestattet die mechanische Abbildung einer Schiebereglerfunktion mittels der Bedienungsvorrichtung 14. In den Aufsatz 20 ist ein als Linearführung ausgebildetes Gehäuse 20C für das Steuerelement 26 vorgesehen. Das Schiebereglergehäuse 20C weist einen in Längsrichtung verlaufende Schlitz 20D auf, durch welchen sich das Steuerelement 26 hindurch erstreckt.

Das Steuerelement 26 besitzt einen als Schiebeknopf ausgebildeten Griffbereich 26A sowie einen als Druckpunkt bzw. Gleiter fungierenden Aktuator 26B. Ein durch den Schlitz 20D im Schiebereglergehäuse 20C geführter Schlitten 26C verbindet den Griffbereich 26A sowohl mechanisch als auch elektrisch leitend mit dem Aktuator 26B. Der Schlitten 26C besitzt einen im Schiebereglergehäuse 20C geführten, rechteckigen Grundkörper (der mit dem Aktuator 26B verbunden ist) sowie einen sich durch den Führungsschlitz 20D erstreckenden Steg (der mit dem Griffbereich 26A verbunden ist). Der Aktuator 26B ist im Wesentlichen rechteckig ausgebildet und liegt flächig auf dem Bildschirm 20 und damit dem Glassubstrat 18 gleitbar auf.

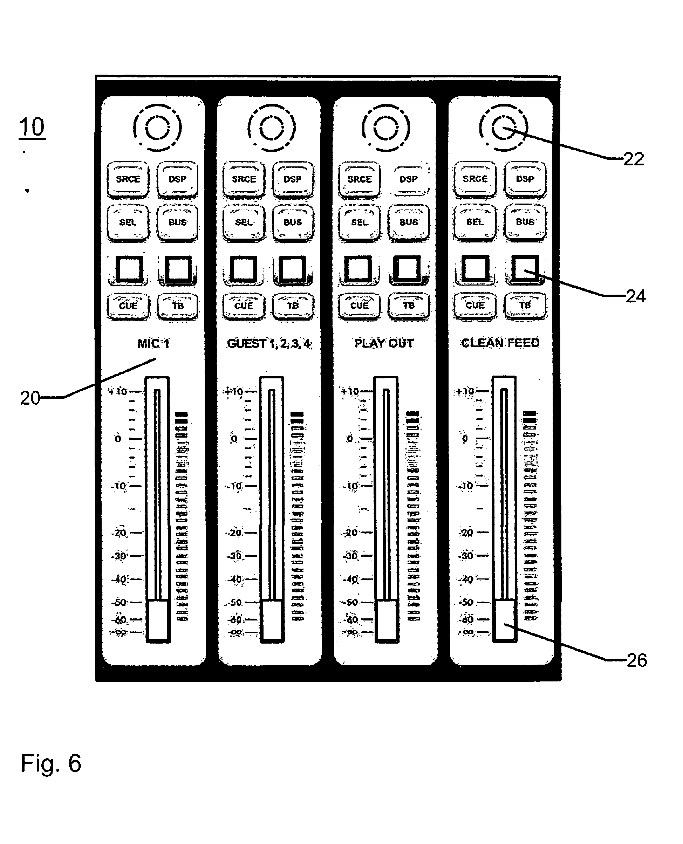

Fig. 6 zeigt ein weiteres Ausführungsbeispiel eines Bedienungssystems 10, welches auf dem vorstehend erläuterten ersten Ausführungsbeispiel basiert. Übereinstimmende Elemente sind mit denselben Bezugszeichen versehen.

Das Bedienungssystem 10 gemäß Fig. 3 ist als Mischpult für die Audiotechnik konfiguriert und umfasst vier als Drehknopf ausgebildete Steuerelemente 22, acht als Tasten ausgebildete Steuerelemente 24 sowie vier als Schieberegler ausgebildete Steuerelemente 26 gemäß den oben erläuterten Figuren 3A, 3B, 4A, 4B, 5A und 5B. Die Steuerelemente 22, 24, 26 sind auf vier Felder des Aufsatzes 20 verteilt. Für jeden der Schieberegler 26 wird auf dem unter der Auflage 20 vorgesehenen Bildschirm (ohne Bezugszeichen) eine beschriftete Skalierung sowie ein der Relativposition des Schiebereglers nachgeführtes Balkendiagramm angezeigt. Ferner sind auf dem berührungsempfindlichen Bildschirm verschiedene Berührungsflächen (z.B. "DSP" oder "BUS") definiert, die auf herkömmliche Weise durch Berührung mittels eines Fingers bedient werden können.

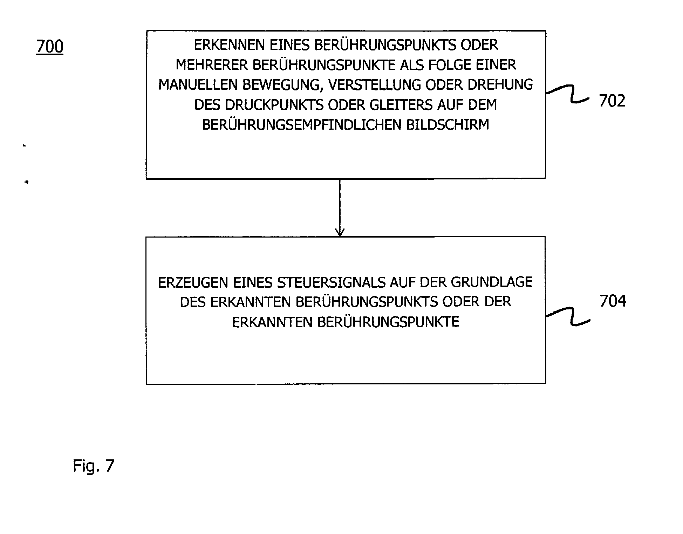

Im Folgenden wird die Funktionsweise des hier vorgestellten Bedienungssystems 10 unter Bezugnahme auf das Ablaufdiagramm 700 gemäß Fig. 7 im Zusammenhang mit der Erzeugung eines Steuersignals näher erläutert. Das Steuersignal ist für ein Steuergerät vorgesehen, welches in den Fign. nicht dargestellt ist. Dieses Steuergerät kann zusammen mit dem berührungsempfindlichen Bildschirm 12 in einem einzigen Gerät bzw. Gehäuse integriert sein oder aber getrennt hiervon vorgesehen werden. So kann der berührungsempfindliche Bildschirm 12 Teil eines Smartphone oder Tablet-Computers sein, das/der über eine Schnittstelle mit dem Steuergerät verbunden ist. Das Steuergerät selbst kann Teil des zu steuernden Geräts sein. Bei dem Steuergerät kann es sich allgemein um Hardware, Software, oder einer Kombination aus Hardware und Software handeln.

Unter Bezugnahme auf Fig. 7 wird in einem ersten Schritt 702 von einer Steuerelektronik des berührungsempfindlichen Bildschirms 12 ein Berührungspunkt oder mehrere Berührungspunkte als Folge einer manuellen Bewegung, Verstellung oder Drehung eines oder mehrerer der Aktuatoren 22B, 24B, 26B auf dem berührungsempfindlichen Bildschirm 12 erkannt. Eine solche Erkennung findet beispielsweise dann statt, wenn der Aktuator 22B des als Drehknopf ausgebildeten Steuerelements 22 sich in Folge einer Drehbewegung des Griffbereichs 20A rotatorisch bewegt, der Aktuator 24B des als Tasters ausgebildeten Steuerelements 24 durch Krafteinleitung in den Griffbereich 24A in Kontakt mit dem berührungsempfindlichen Bildschirm 12 gebracht wird oder der Aktuator 26B des als Schieberegler ausgebildeten Steuerelements 26 durch lineares Verschieben des Griffbereichs 26A auf der Oberfläche des berührungsempfindlichen Bildschirms 12 linear gleitet.

Zur Erkennung des entsprechenden Berührungspunkts oder entsprechender mehrerer Berührungspunkte kann auf dem berührungsempfindlichen Bildschirm wenigstens ein Bildschirmelement (z.B. als Feld) definiert und/oder grafisch dargestellt sein, das vom Aufsatz 14 abgedeckt ist und über das entsprechende Steuerelement 22, 24, 26 bedienbar ist. Eine gleitende Bewegung der Aktuatoren 22B, 26B (Drehknopf/Schieberegler) kann beispielsweise über eine zeitliche Folge mehrerer Berührungspunkte erkannt werden, wohingegen das Erkennen eines einzigen Berührungspunkts des Aktuators 24B (Taster) ausreicht.

In einem weiteren Schritt 704 wird ein Steuersignal für das Steuergerät erzeugt. Das Steuersignal wird auf der Grundlage des erkannten Berührungspunkts oder der mehreren (z.B. zeitlich versetzt) erkannten Berührungspunkte generiert. Die auf diese Weise erzeugten Steuersignale können an das Steuergerät übermittelt werden, welches die Steuersignale in Steuerbefehle für das zu steuernde Gerät umsetzt. Auf diese Weise lassen sich beispielsweise dezibel-genaue Pegeleinstellungen bei Audio- und Videogeräten realisieren (vgl. Fig. 6). Gleichzeitig lassen sich Fehlbedienungen lässig vermeiden, da mittels des Aufsatzes 14 der größte Bereich des berührungsempfindlichen Bildschirms 12 kapazitiv (oder ggf. induktiv, resistiv, usw.) vom Bediener entkoppelt ist bzw. eine entsprechende Kopplung auf die Positionen der Aktuatoren 22A, 22B, 22C auf dem berührungsempfindlichen Bildschirm 12 beschränkt werden kann.

Die oben geschilderten und weitere optionale bzw. fakultative Aspekte des hier vorgestellten Ausführungsbeispiels und der hier allgemein vorgestellten Bedienungstechnik werden in den folgenden Punkten nochmals kurz zusammengefasst:
1) Ein handelsüblichen Bildschirm, beispielsweise ausgeführt als Flachbildschirm, der mit einer berührungsempfindlichen Oberfläche versehen ist, welche in der Lage ist, gleichzeitig einen oder mehrere Berührungspunkte zu erkennen und diese an ein Steuergerät zu übermitteln.
2) Eine (z.B. handelsübliche) Software, die mittels eines an den Bildschirm und an der berührungsempfindlichen Oberfläche angeschlossenen Prozessors Grafikdaten an den Bildschirm ausgibt und die Steuersignale von der berührungsempfindlichen Oberfläche empfängt und auswertet.
3) Ein Aufsatz, der direkt auf oder mit Abstand über dem Bildschirm montiert werden kann und der über einen Gleiter oder Druckpunkt die berührungsempfindliche Oberfläche (z.B. an genau einer Stelle pro Steuerelement) ansteuert und der ganz oder in wesentlichen Teilen transparent ausgeführt ist, wobei der
4) Aufsatz so ausgeführt ist, dass er die Funktion eines mechanischen Schiebereglers, eines Drehknopfes oder eines Tasters erfüllt oder durch Kombination mehrere dieser Funktionen mechanisch abbildet und wobei der
5) Aufsatz überwiegend oder vollständig transparent ausgeführt ist, um die Betrachtung von auf dem Bildschirm dargestellten Graphiken zu ermöglichen und dem Bediener den Komfort einer bildschirmgeschützten Steuerung in Verbindung mit einer direkten manuellen Steuerung über graphische Elemente zu ermöglichen.
6) Ein Aufsatz für einen berührungsempfindlichen Bildschirm, der aus einem ganz oder teilweise transparentem Material besteht, welcher mit einem oder mehreren Elementen versehen ist, die beweglich in dem Aufsatz montiert sind und die manuell in Längsrichtung/Querrichtung bewegt oder verstellt werden können und die über einen angebrachten Druckpunkt mit dem berührungsempfindlichen Bildschirm in Kontakt gebracht werden.
7) Ein Aufsatz für einen berührungsempfindlichen Bildschirm, der aus einem ganz oder teilweise transparentem Material besteht, welches mit einem oder mehreren Steuerelementen versehen ist, die beweglich in dem Aufsatz montiert sind und die manuell gedreht werden können und die über einen angebrachten Druckpunkt mit dem berührungsempfindlichen Bildschirm in Kontakt gebracht werden.
8) Ein Aufsatz für einen berührungsempfindlichen Bildschirm, der aus einem ganz oder teilweise transparentem Material besteht, welcher aus einer Kombination aus Punkt 6) und Punkt 7) besteht.
9) Steuerelemente, die auf oder in dem Aufsatz montiert sind und so ausgeführt sind, dass sie mit leitfähigen Bereichen (Aktuatoren) auf der berührungsempfindlichen Oberfläche aufliegen, wobei diese
10) Bereiche so beschaffen sein können, dass alle auf der berührungsempfindlichen Oberfläche definierten Bedienfelder über die (zumindest) gleiche Fläche verfügen, mit der die Bereiche auf der berührungsempfindlichen Oberfläche aufliegen.
11) Steuerelemente, die so ausgeführt sind, dass der leitfähige, auf der berührungsempfindlichen Oberfläche aufliegende Bereich mit dem Griffbereich leitend verbunden ist, wobei das
12) Steuerelement und der leitfähige, auf der berührungsempfindlichen Oberfläche aufliegende Bereich vom umgebenden Gehäuse bzw. Aufsatz elektrisch isoliert montiert sein kann.

Die hier vorgestellte Technik ermöglicht es, Bildschirme, die mit berührungsempfindlichen Oberflächen versehen sind, mit einem Aufsatz zu versehen, der beliebige Elemente des Bildschirms dergestalt abdeckt, dass diese nicht versehentlich bedient werden können und nur über die im Aufsatz eingebaute Mechanik ein Steuerbefehl an den Bildschirm übermittelt wird. Die eingebaute Mechanik ist so ausgeführt, dass sie eine sehr genaue Steuerung des Bildschirms ermöglicht und somit den Einsatz in Bereichen ermöglicht, in denen sensible Vorgänge gesteuert werden sollen.

Die hier vorgestellte Technik ermöglicht den Einsatz von berührungsempfindlichen Bildschirmen beispielsweise in der professionellen Audio- und Videotechnik, wo schnell wechselnde Zustände mittels grafischer Unterstützung mit direktem Eingriff gesteuert werden sollen, ohne dass versehentliche leichte Berührungen bereits Steuerimpulse auslösen. Ebenso ist es hier gewünscht, dass Einstellungen (zum Beispiel der Pegel) millimetergenau erfolgen, um beispielsweise eine dezibelgenaue Veränderung zu ermöglichen.

## Patentansprüche

1. Vorrichtung (14) zur Bedienung eines berührungsempfindlichen Bildschirms (12), umfassend:
einen Aufsatz (20) für den berührungsempfindlichen Bildschirm (12);
wenigstens ein in dem Aufsatz (20) beweglich montiertes Steuerelement (22, 24, 26), wobei das Steuerelement (22, 24, 26) einen Gleiter oder Druckpunkt (22B, 24B, 26B) aufweist, der zur Bedienung des berührungsempfindlichen Bildschirms (12) mit diesem in Kontakt steht oder in Kontakt bringbar ist.

2. Vorrichtung Anspruch 1, wobei die Vorrichtung (14) die Funktion eines Schiebereglers (26) und/oder Drehknopfes (22) und/oder Tasters (24) mechanisch abbildet.

3. Vorrichtung nach Anspruch 1 oder 2, wobei das wenigstens eine Steuerelement als manuell in horizontaler Richtung beweglicher Schieberegler (26) ausgebildet ist und/oder als manuell drehbarer Drehknopf (22) ausgebildet ist und/oder als manuell in vertikaler Richtung bewegliche Taster (24) ausgebildet ist.

4. Vorrichtung nach einem der vorhergehenden Ansprüche, wobei der Aufsatz (20) teilweise oder vollständig transparent ausgeführt ist.

5. Vorrichtung nach einem der vorhergehenden Ansprüche, wobei eine Führung (20A, 20B, 20C) für das Steuerelement (22, 24, 26) vorgesehen ist.

6. Vorrichtung nach Anspruch 5, wobei für das Steuerelement (22, 24, 26) ein Gehäuse (20A, 20B, 20C) vorgesehen ist, welches in oder auf den Aufsatz (20) montiert ist und als die Führung fungiert.

7. Vorrichtung nach einem der vorhergehenden Ansprüche, wobei das Steuerelement (22, 24, 26) einen Griffbereich (22A, 24A, 26A) mit einem elektrisch leitfähigen Material aufweist und wobei der Druckpunkt oder Gleiter (22B, 24B, 26B) ein elektrisch leitfähiges Material aufweist und elektrisch leitend mit dem Griffbereich (22A, 24A, 26A) verbunden ist.

8. System umfassend eine Vorrichtung (14) zur Bedienung eines berührungsempfindlichen Bildschirms (12) nach einem der vorhergehenden Ansprüche sowie den berührungsempfindlichen Bildschirm (12).

9. System nach Anspruch 8, wobei auf dem berührungsempfindlichen Bildschirm (12) wenigstens ein Bildschirmelement definiert und/oder grafisch darstellbar ist, das über das im Aufsatz (20) montierte Steuerelement (22, 24, 26) bedienbar ist.

10. System nach Anspruch 8 oder 9, wobei auf dem Bildschirm (20) eine Grafik darstellbar ist und wobei der Aufsatz (20) teilweise oder vollständig transparent ausgeführt ist, um eine Betrachtung der Grafik zu ermöglichen.

11. System nach einem der Ansprüche 8 bis 10, ferner umfassend ein Steuergerät, wobei der berührungsempfindliche Bildschirm (20) ausgebildet ist, Steuersignale an das Steuergerät zu übermitteln.

12. System nach einem der Ansprüche 8 bis 11, das zur Ansteuerung von Audiotechnik und/oder Videotechnik ausgebildet ist.

13. Verwendung des Systems oder der Vorrichtung nach einem der vorhergehenden Ansprüche zur Steuerung von Audiotechnik und/oder Videotechnik, insbesondere zur Pegeleinstellung.

14. Verfahren zur Erzeugung eines Steuersignals mittels eines berührungsempfindlichen Bildschirms (12) unter Verwendung eines am berührungsempfindlichen Bildschirm (12) beweglich montierten mechanischen Steuerelements (22, 24, 26), wobei das Steuerelement (22, 24, 26) einen Druckpunkt oder Gleiter (22B, 24B, 26B) aufweist, umfassend die Schritte:
Erkennen eines Berührungspunkts oder mehrerer Berührungspunkte als Folge einer manuellen Bewegung, Verstellung oder Drehung des Druckpunkts oder Gleiters (22B, 24B, 26B) auf dem berührungsempfindlichen Bildschirm (12); und
Erzeugung eines Steuersignals auf der Grundlage des erkannten Berührungspunkts oder der erkannten Berührungspunkte.

15. Computerprogrammprodukt umfassend Programmcodeabschnitte zur Durchführung des Verfahrens gemäß Anspruch 14, wenn das Computerprogrammprodukt auf einem Computer ausgeführt wird.
